# EUROPEAN PATENT APPLICATION

(11) **EP 3 219 486 A2**
(43) Date of publication of application: **20.09.2017**
(21) Application number: 17000277.8
(22) Date of filing: 21.02.2017
(51) Int. Cl.: B32B 17/10, B60J 1/18

(54) **TRANSPARENT PLATE**

(30) Priority: 23.02.2016 JP 2016032287; 18.01.2017 JP 2017007086
(71) Applicant: ASAHI GLASS COMPANY, LIMITED, Tokyo 100-8405 (JP)
(72) Inventor: OTA, Shinya, Tokyo, 100-8405 (JP)
(74) Representative: Müller-Boré & Partner Patentanwälte PartG mbB

(57) **Abstract**

A transparent plate for a vehicle, provided with a first surface and a second surface, includes a light-shielding region and a light-transmitting region, in a planar view; and a light-shielding layer in the light-shielding region on the first surface side. A color of the light-shielding layer is a color other than black, and is a same or similar color to a color of an interior or an exterior of the vehicle or a same or similar color to a complementary color of the color of the interior or the exterior of the vehicle.

## Description

### BACKGROUND OF THE INVENTION

### 1. Field of the Invention

The disclosure herein generally relates to a transparent plate.

### 2. Description of the Related Art

Conventionally, a structure referred to as a glass hatch has been known, which is attached for openability at a vehicle rear, and is both a panel and a window at rear of vehicle (see Japanese Unexamined Patent Application Publication No. 2011-189845). In Japanese Unexamined Patent Application Publication No. 2011-189845, a black shielding film is provided in a peripheral region of a glass plate.

However, because black is a color that ideally absorbs all wavelengths, the reflection rate is low. In consideration of the background, the inventor of the present application has found that it is possible to create a distinctive design effect by reflected light by using a transparent plate having a light-shielding region and a light-transmitting region and including a light-shielding layer of a color other than black.

Note that the above-described effect is not limited to the glass hatch. Such effect occurs in the same way as above when a transparent plate has a light-shielding region and a light-transmitting region.

### SUMMARY OF THE INVENTION

It is a general object of at least one embodiment of the present invention to provide a transparent plate that substantially obviates one or more problems caused by the limitations and disadvantages of the related art.

In order to achieve the above-described purpose, according to an embodiment of the present invention,
a transparent plate for a vehicle provided with a first surface and a second surface, including
a light-shielding region and a light-transmitting region, in a planar view; and
a light-shielding layer in the light-shielding region on the first surface side,
a color of the light-shielding layer being a color other than black, and being a same or similar color to a color of an interior or an exterior of the vehicle or a same or similar color to a complementary color of the color of the interior or the exterior of the vehicle, is provided.

### BRIEF DESCRIPTION OF THE DRAWINGS

Other objects and further features of embodiments will become apparent from the following detailed description when read in conjunction with the accompanying drawings, in which:
FIG. 1 is a diagram depicting a vehicle rear provided with a transparent plate according to an embodiment;
FIG. 2 is a plan view of the vehicle rear according to a first embodiment;
FIG. 3 is a cross-sectional diagram cut along a line A-A in FIG. 2 according to the first embodiment;
FIG. 4 is a cross-sectional diagram cut along the line A-A in FIG. 2 according to a first variation of the first embodiment;
FIG. 5 is a cross-sectional diagram cut along the line A-A in FIG. 2 according to a second variation of the first embodiment;
FIG. 6 is a cross-sectional diagram cut along a line B-B in FIG. 2 according to the first embodiment;
FIG. 7 is a plan view of the vehicle rear according to a second embodiment;
FIG. 8 is a cross-sectional diagram cut along a line C-C in FIG. 7 according to the second embodiment; and
FIG. 9 is a cross-sectional diagram cut along the line C-C in FIG. 7 according to a variation of the second embodiment.

### DETAILED DESCRIPTION OF THE PREFERRED EMBODIMENTS

In the following, a glass plate according to embodiments of the present invention will be described with reference to the accompanying drawings.

Moreover, in the drawings for explaining configurations, coordinates are defined by arrows in the lower left part in each drawing. An explanation will be provided by using the coordinates if necessary. Moreover, in the specification, "X-direction" is assumed to indicate not only a direction from the tail of the arrow representing X-coordinates to the tip, but also a direction inverted by 180 degrees, from the tip to the tail. "Y-direction" and "Z-direction" are also assumed to indicate not only directions from the tails of the arrow representing Y-coordinates and Z-coordinates, respectively, to the tips, but also directions inverted by 180 degrees, respectively, from the tips to the tails. In the specification, the Z-direction and the Y-direction are also referred to as planar directions, and the X-direction is also referred to as a thickness direction.

Moreover, in the specification, technical terms, such as "parallel" or "orthogonal", allow deviations enough to keep the effect of the present invention. For example, errors of about ±5° are allowed from the positional relationship of parallel or orthogonal in a strict sense.

Moreover, in the following, as an embodiment of the present invention, a case where the transparent plate is a glass plate, especially used as a glass hatch, will be described. However, the present invention is not limited to this. For example, the transparent plate may be a front windshield for vehicle, any glass arranged in a side surface of vehicle, or a roof glass. Furthermore, the transparent plate may be a glass for vehicle interior decoration, an instrument panel, and the like. The transparent plate may be made of a resin such as polycarbonate or the like. The transparent plate may be a plate for a window, or may be a cover glass of a display apparatus.

### (First embodiment)

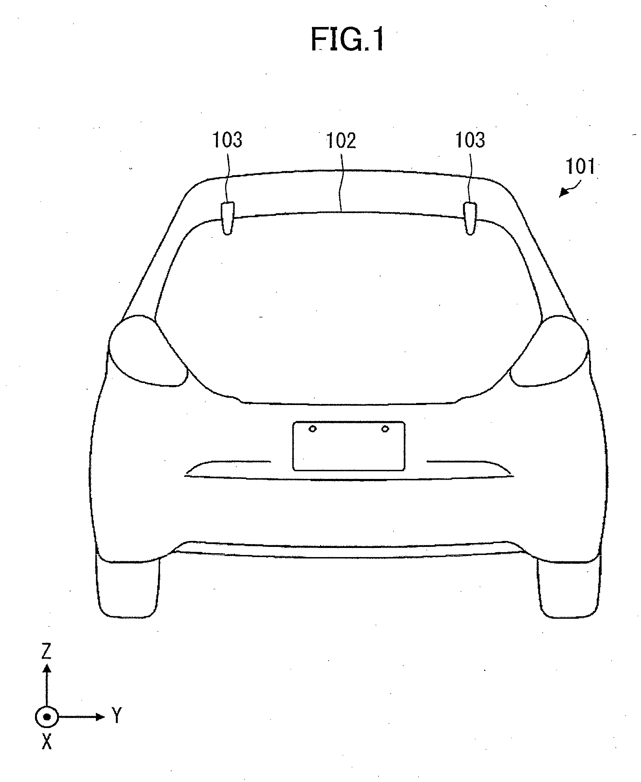

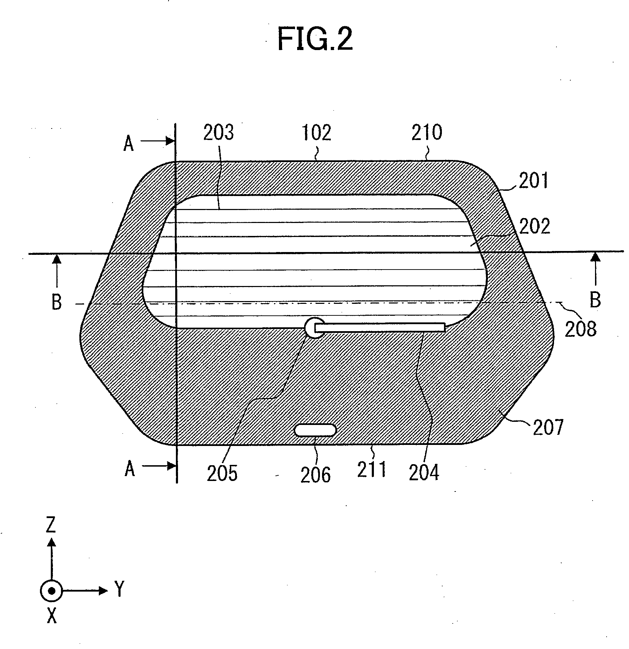

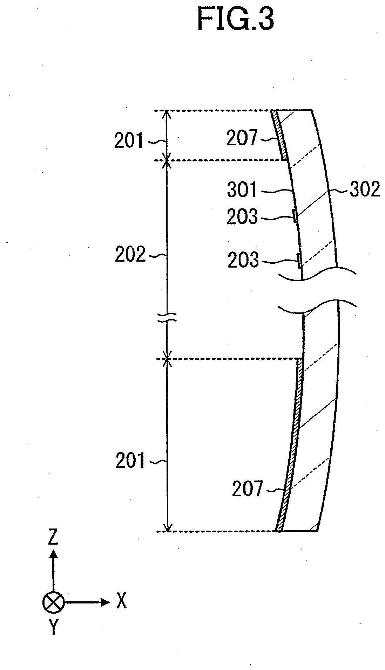

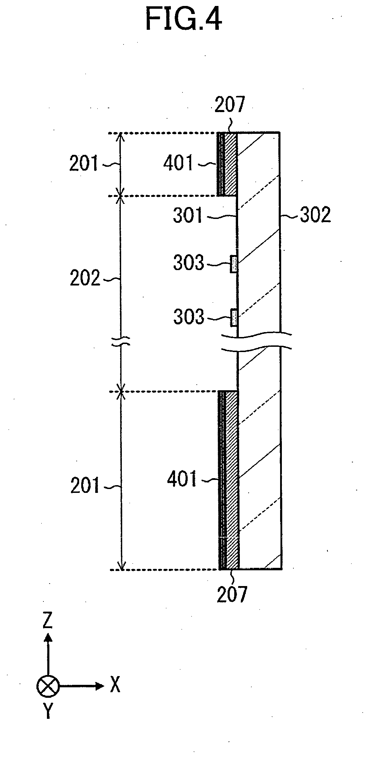

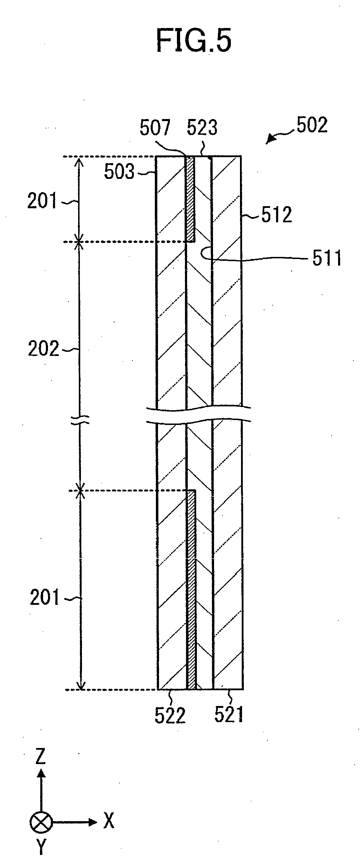

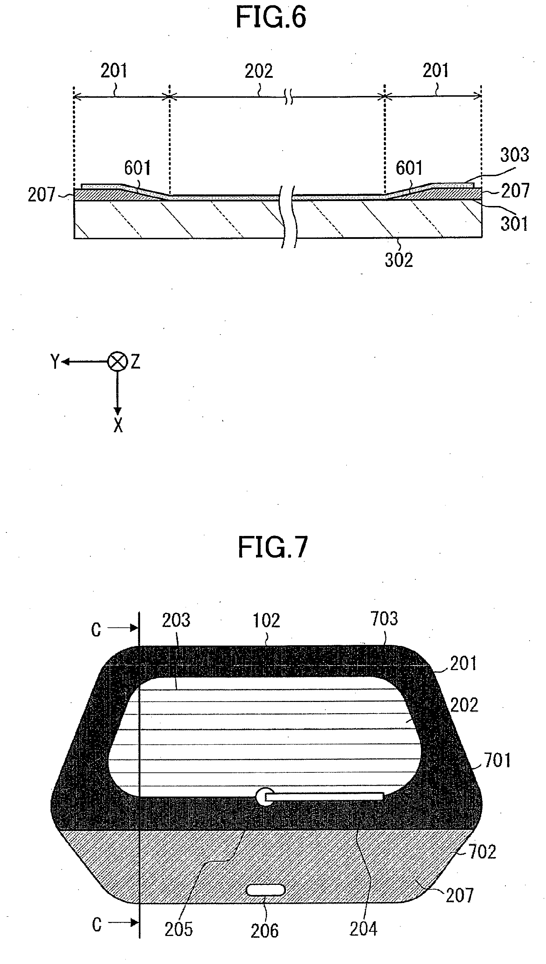

FIG. 1 is a diagram depicting a rear of a vehicle, that is provided with a transparent plate according to the embodiment of the present invention. FIG. 2 is a plan view of the vehicle rear according to a first embodiment. FIG. 3 is a cross-sectional diagram cut along a line A-A in FIG. 2 according to the first embodiment. FIGs. 4 and 5 are cross-sectional diagrams cut along the line A-A in FIG. 2 according to variations of the first embodiment. FIG. 6 is a cross-sectional diagram cut along a line B-B in FIG. 2 according to the first embodiment.

In FIG. 1, a glass plate 102 is attached to a vehicle 101 via a hinge 103. The glass plate 102 can be moved rotationally in the Z-direction from the hinge 103 as a pivot point. The glass plate 102 can be used as a glass hatch that is a panel and a window of the vehicle rear.

In FIGs. 2 and 3, the glass plate 102 is provided with a first surface 301, and a second surface 302 opposite the first surface 301. Moreover, the glass plate 102 is provided with a light-shielding region 201 and a light-transmitting region 202 in a planar view.

The glass plate 102 includes a light-shielding layer 207 in the light-shielding region 201 on the first surface 301 side. A color of the light-shielding layer 207 is a color other than black and a same or similar color to a color of an interior or an exterior of the vehicle or a same or similar to a complementary color of the color of the interior or the exterior of the vehicle.

Here, "black" indicates a color that is visually recognized as black. Moreover, black may include a color with a reflection rate for visible light of 5% or less, or may include a color with a reflection rate of 3% or less. Therefore, the color of the light-shielding layer 207 is not a color that is visually recognized as black, and may be a color with the reflection rate of 15% or more, or preferably 30% or more.

"Same or similar colors" indicates two colors which are chromatic colors, where a hue of one color is within a range including the same hue as of a reference color and hues adjacent to the hue of the reference color, with respect to the Munsell color system hue circle as divided into 20 regions, and a value and a chroma of the one color, with respect to the Munsell color system, are 0.8 times a value and a chroma of the reference color or more but 1.2 times the value and the chroma of the reference color or less, respectively. Alternatively, "same or similar colors" indicate two colors which are achromatic colors, such as white or gray, and a value of the one color with respect to the Munsell color system is 0.8 times a value of the other color or more but 1.2 times the value of the other color or less.

Moreover, "complementary colors" indicate two colors which have hues located at positions opposite to each other, with respect to the Munsell color system hue circle as divided into 20 regions.

According to the above-described configurations, the light-shielding layer 207 not only shields light, but also reflects light towards a person who looks at the glass plate. Furthermore, according to contrast between the light-transmitting region 202 and the light-shielding region 201, an appealing effect, such that the light-shielding region 201 appears emphasized or three-dimensional, occurs and a distinctive design effect can be given.

Here, the Munsell color system indicates the method of displaying colors according to three attributes standardized in Japan as JIS Z 8721.

The light-shielding region 201 is, for example, a region that occupies an area of the surface within a predetermined distance from the outer periphery of the glass plate 102. In the light-shielding region 201, transmittance for visible light is preferably 20% or less, more preferably 15% or less, further preferably 10% or less. Because the opposite side of the glass plate 102 cannot be seen through, when the glass plate 102 is used, for example, as a glass hatch of vehicle, privacy can be easily secured. Therefore, the glass plate 102 is preferable as an item for use as a panel.

Moreover, the light-shielding region 201 is preferably provided with a greater area at one edge side of the glass plate 102 in a planar view. When the light-shielding region 201 is concentrated in a predetermined region of the glass plate 102, the predetermined region can be used easily as a shielding. For example, in the embodiment, the glass plate 102 has an approximately hexagonal shape which is longer in the Y-direction and has an upper edge 210 and a lower edge 211. The light-shielding region 201 is formed greater on the side of the lower edge 211 with respect to a central line 208 along the Y-direction indicated by a dashed-dotted line in FIG. 2, which halves the height of the glass plate 102 in the Z-direction. Therefore, when the glass plate 102 is used, for example, as a glass hatch, a lower area can be used as a trunk. Because the inside of the trunk cannot be seen from outside the vehicle, privacy can be easily secured. Here, the "edge" is not limited to a straight line, but may include an arc-like curve.

An area of the light-shielding region 201 is, for example, 50 cm² or more, more preferably 100 cm² or more, and further preferably 150 cm² or more. Then, the light-shielding region 201 can be used easily as a shielding.

The light-transmitting region 202 is a region that occupies a more inner area of the surface than the light-shielding region 201. An opposite side can be seen through the glass plate 102. The light-transmitting region 202 may be provided with a hot wire 203 for defrosting.

The glass plate 102 may have a curved shape where the first surface 301 is a concave surface and the second surface 302 is a convex surface. In the embodiment, the first surface 301 is an interior surface and the second surface 302 is an exterior surface. A person, who looks the vehicle from outside, sees the light-shielding layer 207 through the glass plate 102, and thus experiences light reflected at the second surface 302 with light reflected at the light-shielding layer 207. As a result, the person experiences a unique texture of glass with the color of the light-shielding layer 207, and the glass plate 102 has a high design effect. When the transparent body is not glass but plastic, such as polycarbonate, a texture of resin (e.g. a texture of frosting) or the like can be felt.

Generally, a concave surface of a window glass for vehicle is an interior surface, and a convex surface of the window glass is an exterior surface. In the case of a display arranged for the interior of a vehicle, a surface which a person touches is an interior surface, and an opposite side is an exterior surface. In the case of an exterior display, the concave surface can be an exterior surface (surface that a person touches), and the convex surface can be an interior surface (surface of a display installation inside a housing).

Moreover, the UV transmittance of the glass plate 102 is preferably 20% or less, more preferably 15% or less, and further preferably 10% or less. The light-shielding layer 207 can be prevented from degrading due to UV, especially, color fade-out, change of color or the like. Moreover, a UV coating layer may be formed on the second surface side of the glass plate 102 or on the first surface side of the light-shielding layer 207.

The glass plate 102 may be a tempered glass. The method of tempering may be an air-cooling strengthening method or a chemical strengthening method.

Moreover, the transparent plate may be, as illustrated in FIG. 5, a laminated glass 502. The laminated glass 502 includes a first glass plate 521, and a second glass plate 522 that is bonded to the first glass plate 521 via an intermediate film 523. The first glass plate 521 is provided with a first surface 511 and a second surface 512 opposite the first surface 511. Moreover, the laminated glass 502 includes a light-shielding layer 507 on the the first surface 511 side. The light-shielding layer may be a part of the intermediate film 523 that is stained, or a layer provided on either surface of the intermediate film 523. Alternatively, the light-shielding layer 507 may be provided on either surface of the second glass plate 522. That is, in the specification, the "the first surface side" indicates a side relating to the first surface 511, opposite to the second surface 512.

When the transparent plate is the laminated glass 502, the UV transmittance of the laminated glass 502 is preferably 20% or less, more preferably 15% or less, and further preferably 10% or less. The light-shielding layer 207 can be prevented from degrading due to UV, especially, color fade-out, change of color or the like. Here, the "UV transmittance of the laminated glass" may be achieved by the intermediate film 523, or by the glass plate 521. That is, UV can be preferably reduced to 20% or less, for the UV attaining the light-shielding layer 507 from the exterior side.

The light-shielding layer 207 may be an organic paint or an inorganic paint. By applying the paint on a surface of the glass plate 102, drying, and curing or calcining, the light-shielding layer 207 is formed. For example, the light-shielding layer 207 may be a color ceramic or a paint including color pigment. The paint includes, for example, an acrylic resin-based paint. The acrylic resin-based paint has great adhesive power, and is also excellent in weatherability and corrosion resistance. Moreover, the paint is preferable because of its beautiful finish. Moreover, the paint may be a melamine resin-based paint or an epoxy resin-based paint. The color pigment may be various colors.

Moreover, instead of the paint, the light-shielding layer 207 formed in a shape of sheet may be bonded to the glass plate 102 via an adhesive or the like. Moreover, described as above, in the case of the laminated glass 502, the light-shielding layer 207 may be provided for a part or an entire section of the intermediate film in the thickness direction.

Moreover, the light-shielding layer 207 may be a crystalline coating film. The crystalline coating film indicates, for example, a film having a configuration in which crystals are deposited upon calcining paint or the like and finally the paint is crystallized. The crystal includes, for example, a Bi₂SiO₅ crystal. When the crystalline coating film is formed on the concave surface side of the glass plate 102, a mold releasing property upon press-molding the glass plate 102 is excellent.

Moreover, the thickness of the light-shielding layer film 207 is preferably 1 µm or more, more preferably 5 µm or more, further preferably 10 µm or more, and further preferably 20 µm or more. Color unevenness of the light-shielding layer 207 and unevenness of a transmittance of visible light can be prevented.

Moreover, the thickness of the light-shielding layer 207 is preferably 1 mm or less, more preferably 800 µm or less, and further preferably 500 µm or less. Because a difference in levels between the light-shielding region 201 and the light-transmitting region 202 becomes smaller at the boundary between the regions, upon forming the hot wire 203 across the boundary between the light-shielding region 201 and the light-transmitting region 202, printing of the hot wire 203 becomes easier.

As illustrated in FIG. 6, the light-shielding layer 207 is preferably formed so as to become thinner as the light-shielding region 201 approaches the light-transmitting region 202. In FIG. 6, the light-shielding layer 207 has a diagonal surface 601, a thickness of which decreases gradually. For example, when the hot wire 303 is formed across the boundary between the light-shielding region 201 and the light-transmitting region 202, a difference in level at the boundary can be reduced, and printing of the hot wire 203 becomes easier.

Moreover, in a periphery of the hinge 103, an attachment base 205 of a wiper 204, and an opening/closing operation site 206, the glass plate 102 may have a through hole or a notch. In a periphery of the through hole or the notch, the light-shielding layer 207 is preferably formed thicker than the other sites. Although in the periphery of a through hole or a notch, due to attachment, sliding and the like of members, exfoliation or breakage of the light-shielding layer 207 can easily occur, the exfoliation or breakage can be prevented according to the above-described structure.

Moreover, when the transparent plate is a glass plate for vehicle, e.g. a glass hatch, as illustrated in FIG. 1, the color of the light-shielding layer 207 is a color other than black. When the color of the light-shielding layer 207 is a same or similar color to a color of an exterior of a vehicle 101, a hue of the light-shielding layer 207 and a hue of the exterior of the vehicle 101 are hues with a feeling of unity, and a design effect for the exterior is enhanced.

Moreover, as illustrated in FIG. 1, when the transparent plate is a glass plate for vehicle, e.g. a glass hatch, the color of the light-shielding layer 207 may be a color other than black, and a same or similar color to a complementary color of the color of the exterior of the vehicle 101. By strikingly making the hue of the light-shielding layer 207 different from the hue of the exterior of the vehicle 101, an effect of mutually highlighting the hues can be obtained.

Here, the color of the exterior of the vehicle 101 indicates a color mainly used in the exterior of the vehicle 101, such as a color of a vehicle body. The color of exterior of the vehicle 101 may be a color other than black.

Moreover, when the transparent plate is taken as an interior member for vehicle, if the color of the light-shielding layer 207 is a same or similar color to a color of an interior of the vehicle 101, the color of the light-shielding layer 207 and the color of the interior of the vehicle 101 are colors with a feeling of unity, and a design effect for the interior is enhanced. Here, the color of the interior of the vehicle 101 is at least one color of a seat, a floor, an instrument panel, a door on the interior side, and an interior material. The color or the interior of the vehicle 101 may be a color other than black.

When the interior is wood-effect or natural stone-like, the hue of the light-shielding layer 207 may be set to a hue of an average of the hues used for such effects. Moreover, the light-shielding layer 207 may be a layer to which a wood-effect film or a natural stone-like film is bonded.

Moreover, when the transparent plate is taken as the interior member for vehicle, the color of the light-shielding layer 207 may be a same or similar color to a complementary color of the color of the interior of the vehicle 101. By strikingly making the hue of the light-shielding layer 207 different from the hue of the interior of the vehicle 101, an effect of mutually highlighting the hues can be obtained.

When the light-shielding layer 207 is seen through the glass plate 102, i.e. the light-shielding layer 207 is seen from the second surface 302 side, the hue of the light-shielding layer 207 may vary according to the thickness and color tone of the glass plate 102. In this case, it is preferable that at least one of the hue from the light-shielding layer 207 itself and the hue from the light-shielding layer 207 seen from the the second surface 302 side satisfy the above-described range of the hue, i.e. at least one of the hues are the same hue as the hue of the exterior or the interior of the vehicle or hues adjacent to the hue, with respect to the Munsell color system hue circle as divided into 20 regions.

Moreover, the light-shielding layer 207 may double as a primer that bonds the glass plate 102 with the vehicle 101.

As illustrated in FIG. 4, a coating layer 401 may be formed on the light-shielding layer 207 on a side opposite to the first surface 301. The coating layer 401 may be, for example, a transparent resin layer, or a black ceramic paste. The coating layer 401 is preferably a crystalline coating film. When the coating layer 401 covering the light-shielding layer 207 is the crystalline coating film, even if the light-shielding layer 207 is not a crystalline coating film, a mold releasing property upon press-molding the glass plate 102 is excellent. The coating layer 401 may be a black light-shielding film.

### (Second embodiment)

In the following, with reference to FIGs. 7 to 9, a second embodiment of the present invention will be described. The same reference numeral is assigned to a member that has the same configuration as in the first embodiment, and an explanation thereof will be omitted.

FIG. 7 is a plan view of the vehicle rear according to the second embodiment.

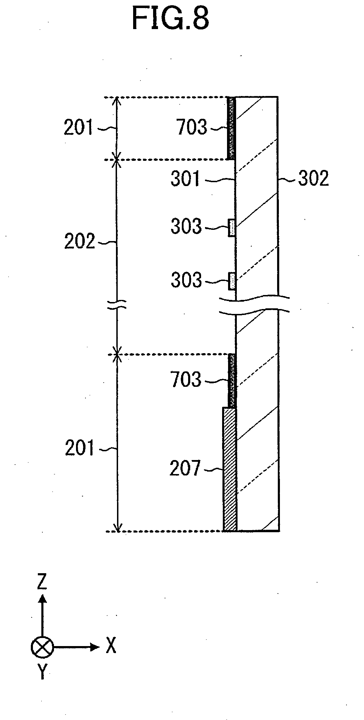

FIG. 8 is a cross-sectional diagram cut along a line C-C in FIG. 7 according to the second embodiment.

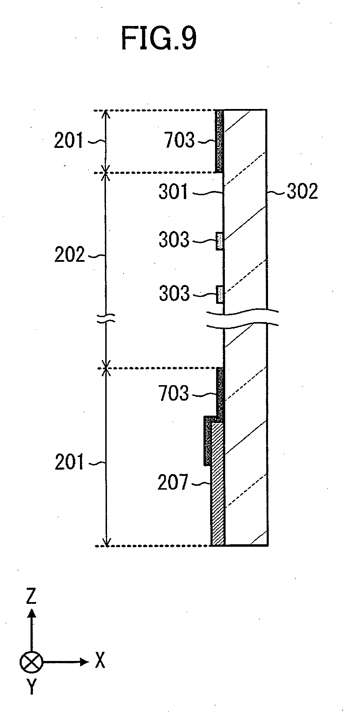

FIG. 9 is a cross-sectional diagram cut along the line C-C in FIG. 7 according to a variation of the second embodiment.

The glass plate 102 is provided with a film-type black light-shielding layer 703 in a region 701 around the light-transmitting region 202 within the light-shielding region 201, in a planar view from the second surface 302 side. Moreover, the glass plate 102 is provided with the light-shielding layer 207 including a region 702 other than the region in which the black light-shielding layer 703 is provided in the light-shielding region 201, in the planar view from the second surface 302 side. The color of the region 702 is a color other than black, and a same or similar color to the color of the exterior or the interior of the vehicle. The black light-shielding layer 703 may be a conventional layer that is generally used in a periphery of a glass plate for vehicle. Because the glass plate 102 is not greatly different in design from the conventional glass plate for vehicle, a person is unlikely to find the design awkward. Furthermore, by the light-shielding layer 207, according to contrast among the light-transmitting region 202, the black light-shielding layer 703 in the light-shielding region 201, and the light-shielding layer 207 in the light-shielding region 201, an appealing effect, such that the color of the light-shielding region 201 appears emphasized or three dimensional, occurs and a distinctive design effect can be given.

The "region around the light-transmitting region" is not particularly limited, but is, for example, a region of 15 mm from an end portion of the light-transmitting region 202 toward an edge of the glass plate 102.

The black light-shielding layer 703 may not be formed in the whole of the region 701 around the light-transmitting region 202. The black light-shielding layer 703 may be provided at least as a part of the region 701, such as an edge or two edges that oppose to each other.

A thickness of the black light-shielding layer 703 is not particularly limited, but is preferably, for example, 50 µm or less. Moreover, when the thickness of the black light-shielding layer 703 is greater than or equal to the thickness of the light-shielding layer 207, and the black light-shielding layer 703 is a crystalline paint, the mold releasing property is enhanced.

Moreover, as illustrated in FIG. 9, the black light-shielding layer 703 may be partially laminated on the light-shielding layer 207. Because an edge of the light-shielding layer 207 is tends to be easily peeled off, the edge can be protected. Moreover, when the black light-shielding layer 703 is a crystalline paint, the mold releasing property is enhanced.

### (Manufacturing method)

The transparent plate according to the embodiment of the present invention can be prepared, for example, according to the following processes.

First, a plate glass having a shape of a plate is prepared. The plate glass is cut in a prescribed dimension and a shape, and cut surfaces are chamfered.

Afterwards, a paint that becomes a raw material of the light-shielding layer 207 is applied onto the plate glass. The application method for the paint is not particularly limited, but a roll coat method, a spray coating method, a dip-coating method, a flow coat method, a curtain coating method, a screen printing method, a screen-printing method, a flexographic printing method, a spin coating method or the like is used. Moreover, a process may be employed in which after applying the paint on the entire surface of the glass plate, the paint in a region corresponding to the light-transmitting region 202 is removed.

Subsequently, the paint is dried or calcined. Here, main drying or main calcining may be performed while imparting temperature (heat) using a thermostatic bath or the like. Moreover, not limited to whether imparting temperature or not imparting temperature, the process may be left at preliminary drying or preliminary calcining.

Afterwards, the coating layer 401 and/or the black light-shielding layer 703 are applied. The method of application may be different from or the same as the application method for the light-shielding layer 207.

Then, the plate glass is heated above the softening temperature, and is formed by being bent in a desired shape. During the process, the light-shielding layer 207, the coating layer 401 and/or the black light-shielding layer 703 may be subjected to the main drying and/or the main calcining. The bending forming may be performed by using a publicly known method, such as a press molding method, a gravity molding method, a roller molding method, or the like.

In this way, the transparent plate according to the embodiment can be obtained.

The present invention is preferably used as a transparent plate, especially a glass plate, especially a glass plate for vehicle window or a decorative member in vehicle.

According to the present invention, a transparent plate having a high design effect can be provided.

Further, the present invention is not limited to these examples, but various variations and modifications may be made without deviating from the scope of the present invention.

The present application is based on and claims benefit of priority of Japanese Patent Applications No. 2016-032287, filed February 23, 2016, and No. 2017-007086, filed January 18, 2017, the entire contents of which are incorporated herein by reference.

## Claims

1. A transparent plate for a vehicle provided with a first surface and a second surface, the transparent plate comprising:
a light-shielding region and a light-transmitting region, in a planar view; and
a light-shielding layer in the light-shielding region on the first surface side,
a color of the light-shielding layer being a color other than black, and being a same or similar color to a color of an interior or an exterior of the vehicle or a same or similar color to a complementary color of the color of the interior or the exterior of the vehicle.

2. The transparent plate according to claim 1,
wherein a hue of the color of the light-shielding layer is within a range including the same hue as a hue of the color of the interior or the exterior of the vehicle and hues adjacent to the hue of the color of the interior or the exterior of the vehicle, with respect the Munsell color system hue circle divided into 20 regions, and a value and a chroma in the Munsell color system of the color of the light-shielding layer are 0.8 times a value and a chroma of the color of the interior or the exterior of the vehicle or more but 1.2 times the value and the chroma of the color of the interior or the exterior of the vehicle or less, respectively.

3. The transparent plate according to claim 1 or 2,
wherein the transparent plate has a curved shape where the first surface is a concave surface and the second surface is a convex surface.

4. The transparent plate according to any one of claims 1 to 3,
wherein the first surface is an interior surface and the second surface is an exterior surface.

5. The transparent plate according to any one of claims 1 to 4,
wherein the light-shielding region is provided with a greater area at one edge side of the transparent plate.

6. The transparent plate according to any one of claims 1 to 5,
wherein a UV (ultraviolet) transmittance of the transparent plate is less than or equal to 20%.

7. The transparent plate according to any one of claims 1 to 6,
wherein the transparent plate is a laminated glass, and
a UV transmittance of the laminated glass is less than or equal to 20%.

8. The transparent plate according to any one of claims 1 to 7,
wherein a visible light transmittance of the light-shielding region is less than or equal to 20%.

9. The transparent plate according to any one of claims 1 to 8,
wherein the light-shielding layer is a crystalline coating film.

10. The transparent plate according to any one of claims 1 to 9,
wherein a coating layer is formed on the light-shielding layer on a side opposite to the first surface, and
the coating layer is a crystalline coating film.

11. The transparent plate according to any one of claims 1 to 10,
wherein a thickness of the light-shielding layer film is greater than or equal to 1 µm but less than or equal to 1 mm.

12. The transparent plate according to any one of claims 1 to 11,
wherein a thickness of the light-shielding layer film decreases as the light-shielding region approaches the light-transmitting region.

13. The transparent plate according to any one of claims 1 to 12 further comprising:
a through hole or a notch,
wherein a thickness of the light-shielding layer film around the through hole or the notch is thicker than at other sites.

14. The transparent plate according to any one of claims 1 to 13 further comprising:
a black light-shielding layer in a region around the light-transmitting region,
wherein in the light-shielding region, a color of a region other than the region in which the black light-shielding layer is provided, is a color other than black and being a same or similar color to the color of the interior or the exterior of the vehicle.
